# EUROPÄISCHE PATENTSCHRIFT

(11) **EP 2 418 395 B1**
(45) Veröffentlichungstag und Bekanntmachung des Hinweises auf die Patenterteilung: **05.07.2017**
(21) Anmeldenummer: 11005507.6
(22) Anmeldetag: 06.07.2011
(51) Int. Cl.: F16F 13/26

(54) **Hydrolager**
Hydraulic support
Couche hydraulique

(30) Priorität: 11.08.2010 DE 102010034061
(43) Veröffentlichungstag der Anmeldung: 15.02.2012
(73) Patentinhaber: Vibracoustic GmbH, 64293 Darmstadt (DE)
(72) Erfinder: Simuttis, Arnold, Dr., 55545 Bad Kreuznach (DE)
(74) Vertreter: Flügel Preissner Schober Seidel

(56) Entgegenhaltungen:
- DE-A1- 4 137 602
- JP-A- 2005 155 899
- JP-A- 2010 043 702
- US-A1- 2006 097 437

## Beschreibung

### Technisches Gebiet

Die Erfindung betrifft ein Hydrolager, umfassend ein Traglager und ein Auflager, die durch einen im Wesentlichen hohlkegelförmigen Federkörper aus gummielastischem Werkstoff aufeinander abgestützt sind und einen Arbeits- und einen Ausgleichsraum begrenzen, die mit Dämpfungsflüssigkeit gefüllt und durch eine in Richtung der eingeleiteten Schwingungen elastisch nachgiebige Trennwand auf ihren einander zugewandten Seiten voneinander getrennt sind, wobei die Trennwand eine Dämpfungsöffnung aufweist, durch die der Arbeits- und der Ausgleichsraum strömungsleitend miteinander verbunden sind.

### Stand der Technik

Derartige Hydrolager sind allgemein bekannt und gelangen zum Beispiel zur Abstützung einer Verbrennungskraftmaschine gegenüber der Karosserie eines Kraftfahrzeugs zur Anwendung. Die Dämpfungsöffnung in der Trennwand zwischen dem Arbeits- und dem Ausgleichsraum ist häufig kanalförmig ausgebildet, wobei zur Dämpfung von tieffrequenten großamplituden Schwingungen die Dämpfungsflüssigkeit innerhalb des Dämpfungskanals phasenverschoben hin und her verlagert wird.

Zur Isolierung höherfrequenter kleinamplitudiger Schwingungen bewegt sich die Trennwand zwischen dem Arbeits- und dem Ausgleichsraum phasenverschoben zu den eingeleiteten Schwingungen hin und her, so dass akustisch störende Schwingungen minimiert werden.

JP 2010 043 702 A offenbart ein Hydrolager, das eine Vibrationsplatte aufweist, welche eine erste Flüssigkeitskammer von einer zweiten Flüssigkeitskammer trennt. Die Vibrationsplatte ist über einen Stift mit einem Aktuator verbunden. JP 2005 155 899 A offenbart eine Vibrationsabsorbiervorrichtung mit einer ersten Montageeinheit und einer zweiten Montageeinheit, die über eine vibrationsabsorbierende Basis miteinander verbunden sind. US 2006/097437 A1 beschreibt eine aktive Vibrationsdämpfungsvorrichtung mit einem ersten Befestigungselement und einem zweiten Befestigungselement, welche über einem elastischen Gummikörper miteinander verbunden sind. DE 4 137 602 A1 betrifft ein Gummilager, welches einen Arbeitsraum und einen Ausgleichsraum aufweist, die durch eine Kompensationswand voneinander getrennt sind.

Der Erfindung liegt die Aufgabe zugrunde, ein Hydrolager der eingangs genannten Art derart weiter zu entwickeln, dass sich das Hydrolager in Richtung der eingeleiteten Schwingungen in einem breiten Frequenzbereich so weich wie möglich und weicher als bekannte Lösungen verhält und unerwünschte, betriebsbedingte Geräusche in diesem Frequenzbereich minimiert werden.

### Darstellung der Erfindung

Diese Aufgabe wird erfindungsgemäß durch ein Hydrolager gemäß Anspruch 1 gelöst. Auf vorteilhafte Ausgestaltungen nehmen die Unteransprüche Bezug.

Zur Lösung der Aufgabe ist es vorgesehen, dass auf der dem Arbeitsraum axial abgewandten Seite des Ausgleichsraums ein aktives Modul mit einem Linearmotor angeordnet ist, zur Erzeugung einer geregelten Tilgerschwingung und dass der Linearmotor eine Verbindungseinrichtung umfasst, die mit der Trennwand verbunden ist.

Durch die Integration des aktiven Moduls in das Hydrolager wird über den Linearmotor die Verbindungseinrichtung angetrieben, die mit der Trennwand verbunden ist. Werden Schwingungen über das Traglager in das Hydrolager eingeleitet, wird die Trennwand mittels der Verbindungseinrichtung und dem Linearmotor vom Arbeitsraum weg in Richtung des Ausgleichsraums bewegt, so dass die eingeleiteten Schwingungen möglichst wenig Widerstand erfahren, also quasi ins Leere laufen. Dadurch wird die Übertragung von Schwingungen und Geräuschen minimiert.

Die Trennwand ist durch eine Gummimembran mit Armierung gebildet, wobei die Verbindungseinrichtung mit der Armierung verbunden ist. Insgesamt ist für eine Minimierung der Schwingungs- und Geräuschübertragung entscheidend, dass die bewegten Massen innerhalb des aktiven Moduls möglichst gering gehalten werden. Dadurch sind die Reaktionszeiten bei der Erzeugung einer geregelten Tilgerschwingung nur gering, was insbesondere von hervorzuhebendem Vorteil ist, wenn die eingeleiteten Schwingungen höherfrequent sind.
Das erfindungsgemäße Hydrolager löst die gestellte Aufgabe in einem breiten Frequenzbereich, zumindest zwischen etwa 20 Hz und 400 Hz. In diesem Frequenzbereich kann das Lager durch das aktive Modul gezielt weich abgestimmt werden, um dadurch unerwünschte Geräusche in diesem Frequenzbereich zu minimieren. Hochfrequente Härte und/oder akustische Rauigkeit wird in dem genannten Frequenzbereich vermieden.
Die Gummimembran mit der Armierung weist insgesamt nur eine geringe Masse auf. Die Gummimembran ist hauptsächlich für diese geringe Masse der Trennwand veranwortlich. Um eine formstabile Anbindung der Verbindungseinrichtung an die Trennwand zu erreichen, ist die Armierung vorgesehen, die bevorzugt aus einem formstabilen und trotzdem leichten Werkstoff besteht. Die Armierung kann beispielsweise aus einem zähharten Kunststoff oder aus Leichtmetall bestehen.

Für eine weitere Reduzierung der bewegten Massen ist es vorgesehen, dass die Armierung erste Durchbrechungen aufweist, die von im Wesentlichen scheibenfömigen Gummikörpern der Gummimembran zumindest teilweise ausgefüllt sind. Dadurch wird, im Vergleich zu einer nicht-durchbrochenen Armierung weiter Gewicht reduziert.
Ein weiterer, für die Funktion ebenfalls sehr wichtiger Vorteil der durchbrochenen Armierung, wobei die ersten Durchbrechungen durch Gummi ausgefüllt sind, ist darin zu sehen, dass die Trennwand im Bereich der Durchbrechungen der Armierung nachgiebig ist und durch diese Nachgiebigkeit im Bereich hoher Frequenzen, die höher als der Regelbereich sind, eine unerwünschte Verhärtung des Hydrolagers vermieden wird.

Die Verbindungseinrichtung kann durch eine Stösselstange gebildet sein, wobei die Stösselstange aus einem Kunststoff oder aus Leichtmetall bestehen kann. Stösselstangen sind einfache Verbindungseinrichtungen, die kostengünstig herstellbar sind. Die aus einem Kunststoff oder aus Leichtmetall bestehende Stösselstange weist trotz ihres geringen Gewichts eine große Steifigkeit auf, was im Hinblick auf die Übertragung der erzeugten geregelten Tilgerschwingung und dem entsprechenden Antrieb der Trennwand von hervorzuhebendem Vorteil ist. Die Stösselstange kann, je nach Ausgestaltung des Hydrolagers, durch den Ausgleichsraum oder am Ausgleichsraum vorbei geführt sein.

Die Stösselstange kann eine verstellbare Länge aufweisen. Dabei ist von Vorteil, dass dadurch das axiale Spiel der Trennwand in ihrem Käfig und der Freiweg der Rückschlussplatte des aktiven Moduls aufeinander abstimmbar sind.
Üblicherweise ist die Trennwand in einem Düsenkäfig angeordnet, wobei der Düsenkäfig zweiteilig ausgebildet ist und wobei die Trennwand in axialer Richtung zwischen den beiden Teilen des Düsenkäfigs in axialer Richtung schwingfähig angeordnet ist. Die Teile des Düsenkäfigs können jeweils mit einer Öffnung versehen sein, um zum Beispiel sowohl den Arbeitsraum als auch den Ausgleichsraum mit einem Dämpfungskanal zu verbinden, der innerhalb des Düsenkäfigs angeordnet und durch die Teile des Düsenkäfigs begrenzt ist. Die Teile des Düsenkäfigs sind gitterförmig gestaltet, um eine Beaufschlagung der Trennwand mit höherfrequenten kleinamplitudigen Schwingungen und deren Isolierung zu ermöglichen. Durch die längenveränderliche Stösselstange kann die Position der Trennwand derart eingestellt werden, dass sich diese an den Düsenkäfig anlegt, bevor Teile innerhalb des aktiven Moduls aneinanderschlagen und dadurch unerwünschte Geräusche verursachen. Die Teile, die innerhalb des aktiven Moduls aneinanderschlagen könnten, sind Spulen eines elektromagnetischen Aktors und dessen Rückschlussplatte.

Der Linearmotor kann durch einen elektromagnetischen Aktor mit zumindest zwei Spulen und einer Rückschlussplatte gebildet sein. Bevorzugt gelangen nicht nur zwei Spulen zur Anwendung. Bevorzugt ist der Linearmotor durch einen elektromagnetischen Aktor mit vier Spulen und einer Rückschlussplatte gebildet.
Auf die Rückschlussplatte, die die Kreise der magnetischen Felder schließt, wirken insgesamt vier elektromagnetische Spulen eines im Push- Pull- Betrieb doppelt wirkenden Aktors. Bei einer solchen Bauart wird durch zwei parallel arbeitende Aktoren eine besonders hohe Wirkung erreicht.
Ist der aktive Leistungsbedarf nicht besonders groß, kann auch, wie zuvor beschrieben, ein einfacherer Aktor mit zwei Spulen Anwendung finden.

Je eine Spule kann dabei axial oberhalb und axial unterhalb der Rückschlussplatte zur Erzeugung eines statischen Magnetfelds angeordnet sein.
Je eine weitere Spule kann axial oberhalb und axial unterhalb der Rückschlussplatte zur Veränderung des Magnetfelds und damit der Lage der Rückschlussplatte angeordnet sein.

Häufig ist der Bauraum, der für Hydrolager zur Verfügung steht, eng begrenzt, insbesondere axial in Richtung der eingeleiteten Schwingungen. Für solche Anwendungsfälle sind aktive Module, die Tauchspulen umfassen, wenig geeignet, weil diese Tauchspulen in axialer Richtung groß bauen,

Im Hinblick auf eine Minimierung der Baugröße des Hydrolagers axial in Richtung der eingeleiteten Schwingungen kann es vorgesehen sein, dass die Spule und die weitere Spule axial oberhalb der Rückschlussplatte und die Spule und die weitere Spule axial unterhalb der Rückschlussplatte jeweils in einer Radialebene angeordnet sind. Trotz der Verwendung von vier Spulen und der hohen Wirkung wird durch eine solche Anordnung nur die Bauhöhe für zwei Spulen benötigt. Oberhalb der Rückschlussplatte umschließt die weitere Spule die Spule oder die Spule umschließt die weitere Spule. Entsprechend ist die Anordnung unterhalb der Rückschlussplatte. Trotz der hohen Wirkung des aktiven Moduls weist dieses kompakte Abmessungen axial in Richtung der eingeleiteten Schwingungen auf, ebenso wie das gesamte Hydrolager.

Die bewegten Massen innerhalb des aktiven Moduls können dadurch weiter reduziert werden, dass die Rückschlussplatte durch einen ferromagnetischen Ring gebildet ist, der mit einem leichten zentralen Aufnahmeteil verbunden ist. Das Aufnahmeteil besteht bevorzugt aus einem Kunststoff oder einem Leichtmetall, wobei das Aufnahmeteil und der ferromagnetische Ring kraft- und/oder formschlüssig miteinander verbunden sind. Bei einer solchen Ausgestaltung ist von Vorteil, dass nur für den ferromanegtischen Ring soviel schweres Eisen verwendet wird, wie unbedingt nötig, um die Magnetkreise zu schließen.
Dadurch werden die durch die Magnete des Aktors zur beschleunigenden Massen reduziert. Das Aufnahmeteil ist demgegenüber notwendig, um die Stösselstange zur Übertragung der Kraft von der Rückschlussplatte auf die Trennwand aufnehmen zu können. Dafür ist ein Eisen-Werkstoff nicht erforderlich; leichte und zähharte Werkstoffe sind zur Herstellung des Aufnahmeteils ausreichend.

Das Aufnahmeteil kann axial beiderseits Zentrierfedern aufnehmen, zur Zentrierung der Rückschlussplatte in ihrer Ruhelage axial zwischen den Spulen. Die Zentrierfedern halten die Rückschlussplatte axial zwischen den Spulen in der Ruhelage derart in der Schwebe, dass die Rückschlussplatte keine der axial angrenzenden Spulen berührt. Eine Berührung zwischen der Rückschlussplatte und den Spulen wird ohnehin vermieden, wie zuvor beschrieben, dadurch, dass die Rückschlussplatte axial zwischen den Spulen und die Trennwand axial innerhalb des Düsenkäfigs durch die längenveränderliche Stösselstange derart justiert werden, dass nur die Trennwand innerhalb des Düsenkäfigs anschlagen kann; Anschlaggeräusche innerhalb des aktiven Moduls gibt es deshalb während der bestimmungsgemäßen Verwendung des Hydrolagers nicht.

Die Rückschlussplatte und/oder das Aufnahmeteil können zweite Durchbrechungen zur Reduzierung des Strömungswiderstands der Luft im Aktor aufweisen. Die Erzeugung einer exakt geregelten Tilgerschwingung im Bereich von 200 Hz bis 400 Hz wird dadurch erleichtert.

Das Modul kann signalleitend mit der Motorsteuerung eines Kraftfahrzeugs verbunden sein. Das Modul kann mit einer Steuerung oder Regelung verbunden sein, die Signale vom Fahrzeugverhalten und/oder der Motorsteuerung verarbeitet und so das Modulverhalten anpasst Die vorteilhaften Gebrauchseigenschaften, insbesondere die sehr breitbandige Wirkung in einem Frequenzbereich von 20 Hz bis etwa 400 Hz, insbesondere von etwa 200 Hz bis etwa 400 Hz sind dann von Vorteil, wenn auf dem Hydrolager eine Verbrennungskraftmaschine mit Zylinderabschaltung gelagert ist. Dadurch, dass derartige Verbrennungskraftmaschinen teils mit und teils ohne abgeschaltete Zylinder betrieben werden, werden Schwingungen in dem zuvor genannten sehr breiten Frequenzbereich in das Lager eingeleitet und müssen isoliert werden.

Ganz generell wird das aktive Modul an einen Regelkreis angeschlossen, der die Motordrehzahl, die in das Lager eingeleiteten Vibrationen und die Vibrationen an der Karosserieseite misst und bewertet. Danach wird über einen Leistungsverstärker ein Wechselstrom angepasster Frequenz und Amplitude an das aktive Modul geleitet, der über den zwischen den Spulen angeordneten ferromagnetischen Ring und die Stösselstange die Trennwand bewegt und dadurch das Lager dynamisch so erweicht, dass die Dämpfungsflüssigkeit und damit der hohlkegelförmige Federkörper von der Verbrennungskraftmaschine weggezogen werden und damit die Schwingungen quasi ins Leere laufen.

Die vorteilhaften Gebrauchseigenschaften des Hydrolagers sind also darauf zurück zu führen, dass die von den Magnetfeldern bewegten Massen und die Strömungswiderstände im aktiven Modul minimiert sind, damit eine breitbandige Wirkung im Frequenz- und Amplitudenbereich entsteht. Wie zuvor ausgeführt, wird das durch eine Kombination aus Lageraufbau, Werkstoffauswahl und Führung der strömenden Medien zur Reduktion der Kraftanforderungen erreicht.

### Kurzbeschreibung der Zeichnung

Zwei Ausführungsbeispiele werden nachfolgend an Hand der Figuren 1 bis 4 näher erläutert.

Die Figuren 1 bis 4 zeigen jeweils in schematischer Darstellung:
Figur 1 ein erstes Ausführungsbeispiel eines Hydrolagers,
Figur 2 ein Ausfürungsbeispiel einer Trennwand zwischen Arbeitsraum und Ausgleichsraum, wie sie im Ausführungsbeispiel gemäß Figur 3 zur Anwendung gelangt,
Figur 3 ein zweites Ausführungsbeispiel mit einer, bezogen auf Figur 1, abweichend gestalteten Trennwand und einem abweichend gestalteten Düsenkäfig, in dem die Trennwand angeordnet ist,
Figur 4 ein Beispiel einer Anwendung des Hydrolagers gemäß Figuren 1 oder 3 in einem Kraftfahrzeug,
Figur 5 eine perspektivische Ansicht eines Hydrolagers gemäß Figur 1 oder 3,
Figur 6 eine perspektivische Ansicht eines weiteren erfindungsgemäßen Hydrolagers.

### Ausführung der Erfindung

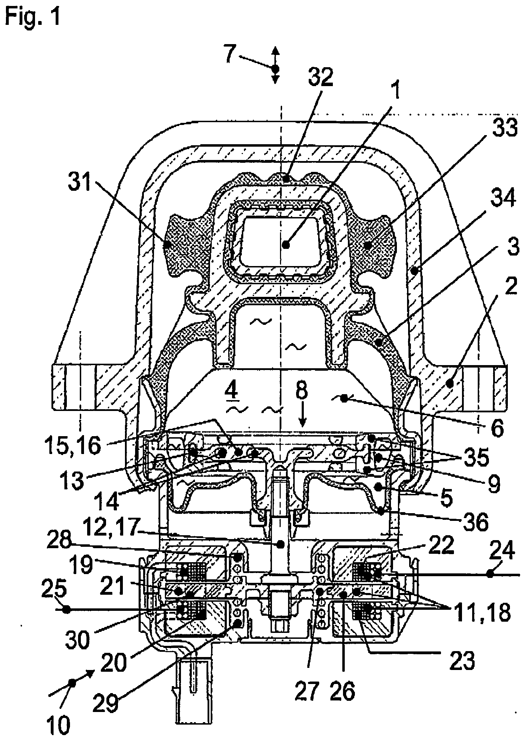

In Figur 1 ist ein erstes Ausführungsbeispiel eines Hydrolagers gezeigt, wobei das Hydrolager auf der dem Arbeitsraum 4 axial abgewandten Seite des Ausgleichsraums 5 ein aktives Modul 10 aufweist.

Das Hydrolager umfasst ein Traglager 1 und ein Auflager 2, die durch den hohlkegelförmigen Federkörper 3 aus gummielastischem Werkstoff aufeinander abgestützt sind.
Das Traglager 1 ist in dem hier gezeigten Ausführungsbeispiel außenumfangsseitig mit Anschlagpuffern 31, 32, 33 versehen, die einem mit dem Auflager 2 verbundenen Gehäuse 34 mit Abstand benachbart zugeordnet sind. Das Hydrolager ist in Figur 1 in einem statisch belasteten Zustand dargestellt.

In Richtung 7 der eingeleiteten Schwingungen, axial zwischen dem Arbeitsraum 4 und dem Ausgleichsraum 5, ist die Trennwand 8 angeordnet, die die Gummimembran 13 mit der Armierung 14 umfasst, wobei die Gummimembran 13 mit der Armierung 14 in einem Düsenkäfig 35 in Richtung 7 der eingeleiteten Schwingungen elastisch nachgiebig angeordnet ist.

Der Düsenkäfig 35 begrenzt die kanalförmige Dämpfungsöffnung 9, wobei die Dämpfungsöffnung 9 den Arbeitsraum 4 und den Ausgleichsraum 5 strömungsleitend miteinander verbindet. Auf der der Trennwand 8 axial abgewandten Seite ist der Ausgleichsraum 5 durch eine im Wesentlichen drucklos Volumen aufnehmende Membran 36, die aus einem gummielastischen Werkstoff besteht, begrenzt. Der Arbeitsraum 4, der Ausgleichsraum 5 und die Dämpfungsöffnung 9 sind mit Dämpfungsflüssigkeit 6 gefüllt, wobei zur Dämpfung tieffrequenter großamplitudiger Schwingungen die Dämpfungsflüssigkeit 6 in der Dämpfungsöffnung 9 hin- und her verlagert wird, vom Arbeitsraum 4 durch die Dämpfungsöffnung 9 in den Ausgleichsraum 5 und vom Ausgleichsraum 5 durch die Dämpfungsöffnung 9 in den Arbeitsraum 4 zurück.

Auf der dem Arbeitsraum 4 axial abgewandten Seite des Ausgleichsraums 5 ist das aktive Modul 10 angeordnet. Das aktive Modul 10 umfasst einen Linearmotor 11, der als elekromagnetischer Aktor 18 mit vier Spulen 19, 20, 22, 23 und einer Rückschlussplatte 21 ausgebildet ist.
Die Spulen 19, 20 von denen eine axial oberhalb und eine axial unterhalb der Rückschlussplatte 21 angeordnet ist, sind zur Erzeugung eines statischen Magnetfelds vorgesehen, um die Rückschlussplatte 21, wie hier dargestellt, in einem axialen Schwebezustand zwischen den Spulen 19, 20 zu halten. Die weiteren Spulen 22, 23, von denen ebenfalls eine axial oberhalb und eine axial unterhalb der Rückschlussplatte 21 angeordnet ist, sind zur Veränderung des Magnetfelds und damit zur Veränderung der Lage der Rückschlussplatte 21 zwischen den Spulen 19, 22 und 20, 23 vorgesehen. Die dynamische Auslenkung der Rückschlussplatte 21 durch die weiteren Spulen 22, 23 erfolgt gegen die Kraft der Zentrierfedem 28, 29, die jeweils stirnseitig einerseits am Aufnahmeteil 27 und stirnseitig andererseits im Gehäuse des aktiven Moduls 10 abgestützt sind.

Die Bewegung der Rückschlussplatte 21 wird durch die Verbindungseinrichtung 12, die als Stösselstange 17 ausgebildet ist, auf die Armierung 14 der Gummimembran 13 übertragen. Die Gummimembran 13 und die Armierung 14 sind ein Bestandteil der Trennwand 8 und, wie zuvor beschrieben, innerhalb des Düsenkäfigs 35 angeordnet. Die Stösselstange 17 hat eine verstellbare Länge, um dadurch die Gummimembran 13 mit der Armierung 14 in ihrer Lage gegenüber der Rückschlussplatte 21 einstellen zu können. Die Einstellung erfolgt derart, dass stets sichergestellt ist, dass die Rückschlussplatte 21 keine der axial beiderseits angrenzenden Spulen 19, 20, 22, 23 während der bestimmungsgemäßen Verwendung des Hydrolagers berührt.

Für gute Gebrauchseigenschaften ist von Vorteil, wenn die bewegten Massen des Hydrolagers möglichst gering sind. Dadurch sind alle beweglichen Teile gewichtsoptimiert, insbesondere dadurch, dass sie aus leichten Werkstoffen, wie beispielsweise aus Kunststoffen oder Leichtmetallen bestehen. Die Rückschlussplatte 21 ist beispielsweise durch einen ferromagnetischen Ring 26 gebildet, der ein zentrales Aufnahmeteil 27, das aus Kunststoff oder Leichtmetall besteht, außenumfangsseitig umschließt. Auch die Stösselstange 17 und/oder die Armierung 14 können aus einem Kunststoff oder aus Leichtmetall bestehen.

Um während der bestimmungsgemäßen Verwendung des Hydrolagers den Luftwiderstand im aktiven Modul 10 zu reduzieren, sind in der Rückschlussplatte 21 und/oder im Aufnahmeteil 27 zweite Durchbrechungen 30 vorgesehen.

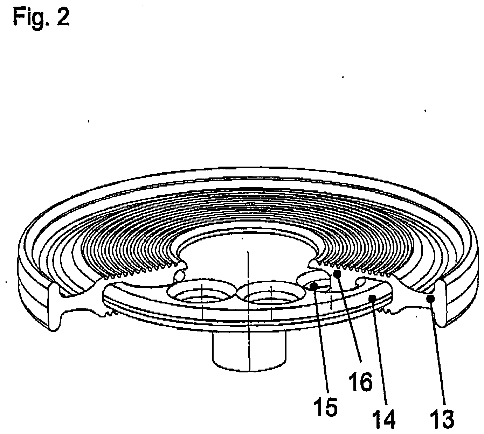

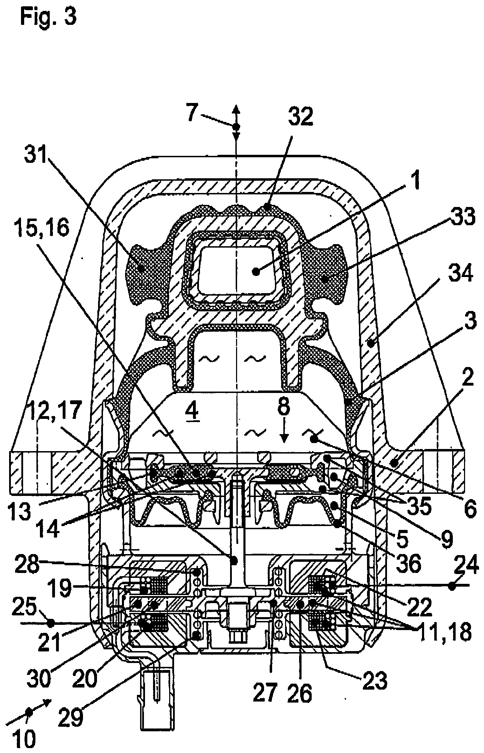

In Figur 2 ist die Gummimembran 13 mit der Armierung 14 aus Figur 3 als Einzelteil gezeigt.

Die Armierung 14 kann durch die Stösselstange 17 mit der Rückschlussplatte 21 verbunden werden und besteht zur Reduzierung der bewegten Massen aus Kunststoff oder Leichtmetall. Die Armierung 14 weist erste Durchbrechungen 15 auf, die zwei Aufgaben erfüllen. Die wichtigste Aufgabe besteht darin, dass die Gummikörper 16 der Gummimembran 13, die die ersten Durchbrechungen 15 durchdringen, für eine zusätzliche Nachgiebigkeit der Gummimembran 13 sorgen, so dass im Bereich hoher Frequenzen, insbesondere in einem Frequenzbereich von 200 Hz bis 400 Hz, Verhärtungen des Hydrolagers vermieden werden. Außerdem tragen die ersten Durchbrechungen 15 dazu bei, dass die Armierung 14, im Vergleich zu einer Armierung 14, die diese ersten Durchbrechungen 15 nicht aufweist, eine geringere Masse hat.

In Figur 3 ist ein zweites Ausführungsbeispiel eines Hydrolagers gezeigt, das sich vom ersten Ausführungsbeispiel gemäß Figur 1 durch eine abweichend gestaltete Trennwand 8 unterscheidet. Die Membran 36 ist nicht, wie in Figur 1, an der Stösselstange 17 befestigt, sondern am Düsenkäfig 35, so dass die Membran 36 bei axialer Hin- und Herbewegung der Rückschlussplatte 21, der Stösselstange 17 und der Armierung 14 mit der Gummimembran 13 nicht mit hin- und herbewegt zu werden braucht. Außerdem muss die Fluidmenge, die der Federkörper 3 verdrängt und in den vom aktiven Modul 10 unabhängigen Ausgleichsraum 5 verschoben wird, nicht mehr vom aktiven Modul 10 bewegt werden. Dieses reduziert die benötigte Antriebskraft. Der so mögliche Kraftüberschuss kann zum Erreichen höherer Tilgerfrequenzen eingesetzt werden.

Dadurch kann die Erzeugung einer geregelten Tilgerschwingung noch exakter und mit weniger Energie erfolgen.

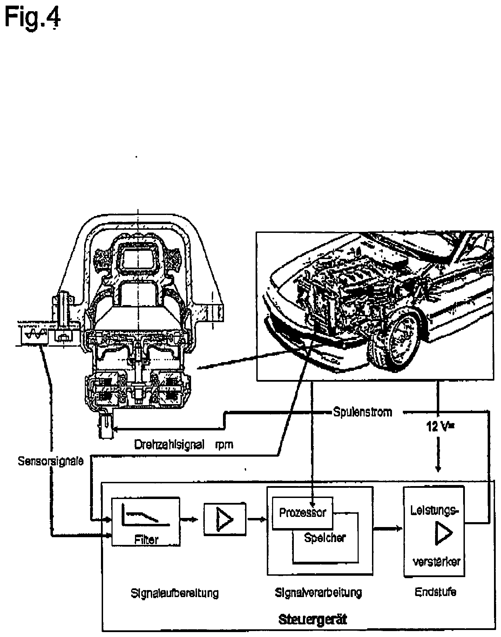

In Figur 4 ist die Verwendung der Hydrolager aus den Figuren 1 und 3 in einem Kraftfahrzeug schematisch gezeigt. Auf den Hydrolagem ist eine Verbrennungskraftmaschine eines Kraftfahrzeugs gelagert, wobei diese Verbrennungskraftmaschine mit einer Zylinderabschaltung versehen ist. Insbesondere zur Abstützung von Verbrennungskraftmschinen mit Zylinderabschaltung sind die erfindungsgemäßen Hydrolager von Vorteil, weil sich das Schwingungsverhalten der Verbrennungskraftmaschinen mit oder ohne abgeschaltete Zylinder deutlich voneinander unterscheidet. Um beiden Betriebzuständen hinsichtlich der Reduzierung störender Geräusche gerecht zu werden, muss das Hydrolager Schwingungen in einem breiten Frequenzbereich von etwa 20 Hz bis 400Hz minimieren.
Das aktive Modul 10 ist dazu an einen hier dargestellten Regelkreis angeschlossen, der die Motordrehzahl, die in das Hydrolager eingeleiteten Vibrationen und die Vibrationen an der Karosserieseite misst und bewertet. Danach wird über einen Leistungsverstärker ein Wechselstrom angepasster Frequenz und Amplitude an das aktive Modul 10 geleitet, wobei der Aktor 18 das Hydrolager über die Stösselstange 17, die Armierung 14 und die Gummimembran 13 dynamisch so erweicht, dass die Dämpfungsflüssigkeit 6 und damit der Federkörper 3 axial vom Motor weggezogen werden und damit die Schwingungen quasi ins Leere laufen.

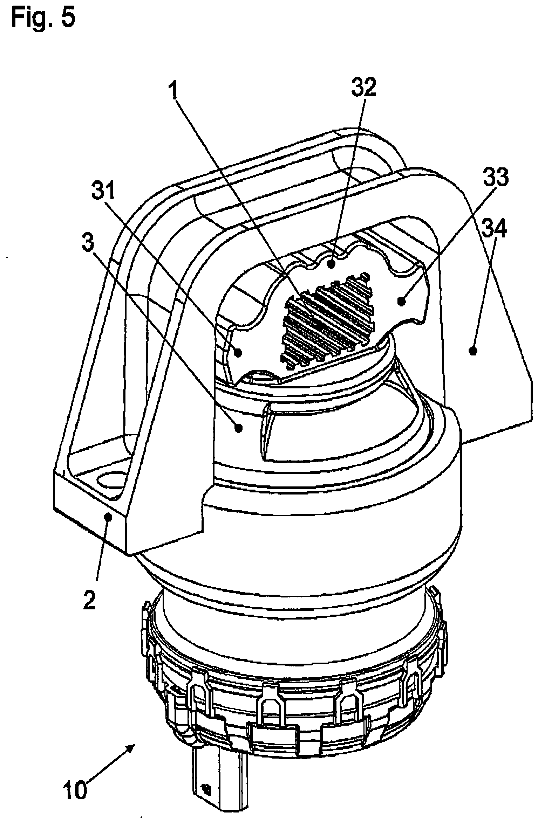

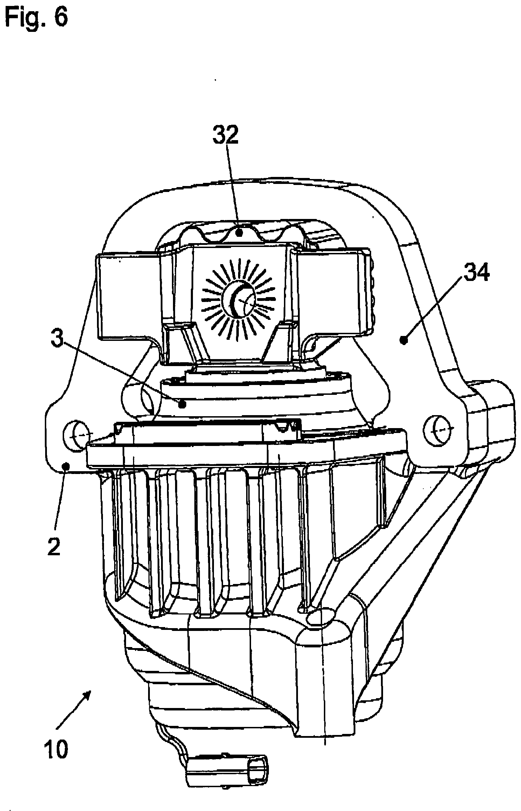

In den Figuren 5 und 6 ist jeweils eine perspektivische Ansicht eines erfindungsgemäßen Hydrolagers gezeigt.

## Patentansprüche

1. Hydrolager, umfassend ein Traglager (1) und ein Auflager (2), die durch einen im Wesentlichen hohlkegelförmigen Federkörper (3) aus gummielastischem Werkstoff aufeinander abgestützt sind und einen Arbeits- (4) und einen Ausgleichsraum (5) begrenzen, die mit Dämpfungsflüssigkeit (6) gefüllt und durch eine in Richtung (7) der eingeleiteten Schwingungen elastisch nachgiebige Trennwand (8) auf ihren einder zugewandten Seiten voneinander getrennt sind, wobei die Trennwand (8) eine Dämpfungsöffnung (9) ausweist, durch die der Arbeits- (4) und der Ausgleichsraum (5) strömungsleitend mit einander verbunden sind, wobei auf der dem Arbeitsraum (4) axial abgewandten Seite des Ausgleichsraums (5) ein aktives Modul (10) mit einem Linearmotor (11) angeordnet ist, zur Erzeugung einer geregelten Tilgerschwingung und dass der Linearmotor (11) eine Verbindungseinrichtung (12) umfasst, die mit der Trennwand (8) verbunden ist, wobei die Trennwand (8) durch eine Gummimembran (13) mit Armierung (14) gebildet ist und dass die Verbindungseinrichtung (12) mit der Armierung (14) verbunden ist und **dadurch gekennzeichnet, dass** die Armierung (14) erste Durchbrechungen (15) aufweist, die von scheibenförmigen Gummikörpern (16) der Gummimembran (13) zumindest teilweise ausgefüllt sind.

2. Hydrolager nach Anspruch 1, **dadurch gekennzeichnet, dass** die Verbindungseinrichtung (12) durch eine Stösselstange (17) gebildet ist.

3. Hydrolager nach Anspruch 2, **dadurch gekennzeichnet, dass** die Stösselstange (17) aus einem Kunststoff oder aus Leichtmetall besteht.

4. Hydrolager nach einem der Ansprüche 2 oder 3, **dadurch gekennzeichnet, dass** die Stösselstange (17) eine verstellbare Länge aufweist.

5. Hydrolager nach einem der Ansprüche 1 bis 4, **dadurch gekennzeichnet, dass** der Linearmotor (11) durch einen elektromagnetischen Aktor (18) mit zumindest zwei Spulen (19, 20) und einer Rückschlussplatte (21) gebildet ist.

6. Hydrolager nach einem der Ansprüche 1 bis 5, **dadurch gekennzeichnet, dass** der Linearmotor (11) durch einen elektromagnetischen Aktor (18) mit vier Spulen (19, 20, 22, 23) und einer Rückschlussplatte (21) gebildet ist.

7. Hydrolager nach einem der Ansprüche 5 oder 6, **dadurch gekennzeichnet, dass** je eine Spule (19, 20) axial oberhalb und axial unterhalb der Rückschlussplatte (21) zur Erzeugung eines statischen Magnetfelds angeordnet sind.

8. Hydrolager nach einem der Ansprüche 5 bis 7, **dadurch gekennzeichnet, dass** je eine weitere Spule (22, 23) axial oberhalb und axial unterhalb der Rückschlussplatte (21) zur Veränderung des Magnetfelds und damit der Lage der Rückschlussplatte (21) angeordnet sind.

9. Hydrolager nach einem der Ansprüche 5 bis 8, **dadurch gekennzeichnet, dass** die Spule (19) und die weitere Spule (22) axial oberhalb der Rückschlussplatte (21) und die Spule (20) und die weitere Spule (23) axial unterhalb der Rückschlussplatte (21) jeweils in einer Radialebene (24, 25) angeordnet sind.

10. Hydrolager nach einem der Ansprüche 5 bis 9, **dadurch gekennzeichnet, dass** die Rückschlussplatte (21) durch einen ferromagnetischen Ring (26) gebildet ist, der mit einem zentralen Aufnahmeteil (27) verbunden ist.

11. Hydrolager nach Anspruch 10, **dadurch gekennzeichnet, dass** das Aufnahmeteil (27) aus einem Kunststoff oder aus Leichtmetall besteht.

12. Hydrolager nach einem der Ansprüche 10 oder 11, **dadurch gekennzeichnet, dass** das Aufnahmeteil (27) axial beiderseits Zentrierfedern (28, 29) aufnimmt, zur Zentrierung der Rückschlussplatte (21) in ihrer Ruhelage axial zwischen den Spulen (19, 20, 22, 23).

13. Hydrolager nach einem der Ansprüche 5 bis 12, **dadurch gekennzeichnet, dass** die Rückschlussplatte (21) und/oder das Aufnahmeteil (27) zweite Durchbrechungen (30) zur Reduzierung des Strömungswiderstandes der Luft im Aktor (18) aufweisen.

14. Hydrolager nach einem der Ansprüche 1 bis 13, **dadurch gekennzeichnet, dass** die Trennwand (8) und das Aufnahmeteil (27) mittels der Stösselstange (17) verbunden sind.

15. Hydrolager nach einem der Ansprüche 1 bis 14, **dadurch gekennzeichnet, dass** das Modul (10) signalleitend mit der Motorsteuerung eines Kraftfahrzeugs verbunden ist.

## Claims

1. A hydro mount comprising a carrying mount (1) and a support (2) which are supported on each other by a spring body (3) essentially having the shape of a hollow cone and being made of rubber-elastic material and bound a working room (4) and a compensating room (5) which are filled with damping fluid (6) and separated, at their sides facing one another, by a separation wall (8) elastically pliable in direction (7) of the induced oscillations, wherein the separation wall (8) comprises a damping opening (9) through which the working room (4) and the compensating room (5) are flow-conductively connected to each other, wherein an active module (10) with a linear motor (11) is disposed on the side of the compensating room (5) axially facing away from the working room (4) for generation of a controlled absorber oscillation and that the linear motor (11) includes a connecting device (12) that is connected to the separation wall (8), wherein the separation wall (8) is formed by a rubber membrane (13) with a reinforcement (14) and that the connecting device (12) is connected to the reinforcement (14) and **characterized in that** the reinforcement (14) comprises first breaches (15) which are filled at least partly by disk-shaped rubber bodies (16) of the rubber membrane (13).

2. The hydro mount according to claim 1, **characterized in that** the connecting device (12) is formed by a push rod (17).

3. The hydro mount according to claim 2, **characterized in that** the push rod (17) is made of a plastic material or a light metal.

4. The hydro mount according to any of claims 2 or 3, **characterized in that** the push rod (17) has an adjustable length.

5. The hydro mount according to any of claims 1 to 4, **characterized in that** the linear motor (11) is formed by an electromagnetic actuator (18) with at least two coils (19, 20) and a reflux plate (21).

6. The hydro mount according to any of claims 1 to 5, **characterized in that** the linear motor (11) is formed by an electromagnetic actuator (18) with four coils (19, 20, 22, 23) and a reflux plate (21).

7. The hydro mount according to any of claims 5 or 6, **characterized in that** one coil (19, 20) each is disposed axially above and axially below the reflux plate (21) for generation of a static magnetic field.

8. The hydro mount according to any of claims 5 to 7, **characterized in that** another coil (22, 23) each is disposed axially above and axially below the reflux plate (21) for changing the magnet field and thereby the position of the reflux plate (21).

9. The hydro mount according to any of claims 5 to 8, **characterized in that** the coil (19) and the other coil (22) are disposed axially above the reflux plate (21) and the coil (20) and the other coil (23) are disposed axially below the reflux plate (21), each in a radial plane (24, 25).

10. The hydro mount according to any of claims 5 to 9, **characterized in that** the reflux plate (21) is formed by a ferromagnetic ring (26) that is connected to a central receiving part (27).

11. The hydro mount according to claim 10, **characterized in that** the receiving part (27) is made of a plastic material or a light metal.

12. The hydro mount according to any of claims 10 or 11, **characterized in that** the receiving part (27) receives centering springs (28, 29) axially on both sides for centering the reflux plate (21) in its rest position axially between the coils (19, 20, 22, 23).

13. The hydro mount according to any of claims 5 to 12, **characterized in that** the reflux plate (21) and/or the receiving part (27) comprise second breaches (30) for reducing the drag of the air in the actuator (18).

14. The hydro mount according to any of claims 1 to 13, **characterized in that** the separation wall (8) and the receiving part (27) are connected to each other via the push rod (17).

15. The hydro mount according to any of claims 1 to 14, **characterized in that** the module (10) is signal-transmittingly connected to the engine control of a motor vehicle.

## Revendications

1. Support hydraulique, incluant un palier-support (1) et un palier supporté (2), qui sont soutenus l'un sur l'autre par un corps-ressort (3) sensiblement en forme de cône creux en un matériau présentant l'élasticité du caoutchouc, et qui délimitent une chambre de travail (4) et une chambre de compensation (5), lesquelles sont remplies avec un fluide d'amortissement (6) et sont séparées l'une de l'autre sur leurs côtés tournés l'un vers l'autre par une paroi de séparation (8) capable de défléchir élastiquement en direction (7) des oscillations appliquées, dans lequel la paroi de séparation (8) comporte une ouverture d'amortissement (9) via laquelle la chambre de travail (4) et la chambre de compensation (5) sont connectées l'une à l'autre de manière à laisser passer un écoulement, dans lequel il est prévu un module actif (10) avec un moteur linéaire (11), agencé sur le côté de la chambre de compensation (5) détourné axialement de la chambre de travail (4), destiné à engendrer une oscillation de compensation régulée, et en ce que le moteur linéaire (11) inclut un moyen de liaison (12) qui est relié à la paroi de séparation (8), dans lequel
la paroi de séparation (8) est formée par une membrane en caoutchouc (13) dotée d'une armature (14), et en ce que le moyen de liaison (12) est relié à l'armature (14), et
**caractérisé en ce que**
l'armature (14) comporte des premières traversées (15) qui sont au moins partiellement remplies avec des corps de caoutchouc en forme de disque (16) de la membrane en caoutchouc (13).

2. Support hydraulique selon la revendication 1, **caractérisé en ce que** le moyen de liaison (12) est formé par une tige-poussoir (17).

3. Support hydraulique selon la revendication 2, **caractérisé en ce que** la tige-poussoir (17) est formée en matière plastique ou en métal léger.

4. Support hydraulique selon l'une des revendications 2 ou 3, **caractérisé en ce que** la tige-poussoir (17) a une longueur réglable.

5. Support hydraulique selon l'une des revendications 1 à 4, **caractérisé en ce que** le moteur linéaire (11) est formée par un acteur électromagnétique (18) avec au moins deux bobines (19, 20) et une plaque de retour (21).

6. Support hydraulique selon l'une des revendications 1 à 5, **caractérisé en ce que** le moteur linéaire (11) est formée par un acteur électromagnétique (18) avec quatre bobines (19, 20, 22, 23) et une plaque de retour (21).

7. Support hydraulique selon l'une des revendications 5 ou 6, **caractérisé en ce qu'**une bobine respective (19, 20) est agencée axialement au-dessus et axialement au-dessous de la plaque de retour (21) pour engendrer un champ magnétique statique.

8. Support hydraulique selon l'une des revendications 5 à 7, **caractérisé en ce qu'**une autre bobine respective (22, 23) est agencée axialement au-dessus et axialement au-dessous de la plaque de retour (21) pour modifier le champ magnétique et ainsi la position de la plaque de retour (21).

9. Support hydraulique selon l'une des revendications 5 à 8, **caractérisé en ce que** la bobine (19) et l'autre bobine (22) sont agencées axialement au-dessus de la plaque de retour (21), et la bobine (20) et l'autre bobine (23) sont agencées axialement au-dessous de la plaque de retour (21), respectivement dans un plan radial (24, 25).

10. Support hydraulique selon l'une des revendications 5 à 9, **caractérisé en ce que** la plaque de retour (21) est formée par une bague ferromagnétique (26) qui est reliée à une pièce de réception centrale (27).

11. Support hydraulique selon la revendication 10, **caractérisé en ce que** la pièce de réception (27) est en matière plastique ou en métal léger.

12. Support hydraulique selon la revendication 10 ou 11, **caractérisé en ce que** la pièce de réception (27) reçoit axialement sur les deux côtés des ressorts de centrage (28, 29) destinés au centrage de la plaque de retour (21) dans sa position de repos axialement entre les bobines (19, 20, 22, 23).

13. Support hydraulique selon l'une des revendications 5 à 12, **caractérisé en ce que** la plaque de retour (21) et/ou la pièce de réception (27) comporte des secondes traversées (30) pour la réduction de la résistance à l'écoulement de l'air dans l'acteur (18).

14. Support hydraulique selon l'une des revendications 1 à 13, **caractérisé en ce que** la paroi de séparation (8) et la pièce de réception (27) sont reliées au moyen de la tige-poussoir (17).

15. Support hydraulique selon l'une des revendications 1 à 14, **caractérisé en ce que** le module (10) est relié à la commande du moteur d'un véhicule automobile de manière à conduire des signaux.
